# EUROPÄISCHE PATENTSCHRIFT

(11) **EP 4 011 729 B1**
(45) Veröffentlichungstag und Bekanntmachung des Hinweises auf die Patenterteilung: **30.08.2023**
(21) Anmeldenummer: 20213046.4
(22) Anmeldetag: 10.12.2020
(51) Int. Cl.: B60T 17/08

(54) **BREMSZYLINDER, SOWIE NUTZFAHRZEUG MIT EINEM BREMSZYLINDER**
BRAKE CYLINDER AND COMMERCIAL VEHICLE WITH A BRAKE CYLINDER
CYLINDRE DE FREINAGE AINSI QUE VÉHICULE UTILITAIRE DOTÉ D'UN CYLINDRE DE FREINAGE

(43) Veröffentlichungstag der Anmeldung: 15.06.2022
(73) Patentinhaber: ZF CV Systems Europe BV, 1170 Brussels (BE)
(72) Erfinder: FRANCZUK, Michal, 49-305 Brzeg (PL); ZBYLUT, Michal, 50-540 Wroclaw (PL)
(74) Vertreter: Rabe, Dirk-Heinrich

(56) Entgegenhaltungen:
- DE-A1- 1 630 624
- GB-A- 2 144 803

## Beschreibung

Die Erfindung betrifft einen Bremszylinder, insbesondere für eine Druckluftbremse, wie sie beispielsweise in Nutzfahrzeugen, wie Lastkraftfahrzeugen oder Anhängefahrzeugen, verwendet wird. Druckluftbetriebene Bremssysteme für Nutzfahrzeuge besitzen üblicherweise eine Feststellbremse mit einem Bremszylinder, der eine Parkfunktion aufweist. Der Bremszylinder enthält hierbei eine Druckfeder, die bewirkt, dass die Feststellbremse ohne Druckluft blockiert. Hierdurch ist das Nutzfahrzeug gesichert, wenn der Motor ausgeschaltet ist. Bei einer Fehlfunktion des Bremssystems, beispielsweise bei einer Leckage des Druckluftsystems, kann das Nutzfahrzeug dann jedoch nicht mehr bewegt werden. Der Bremszylinder enthält deshalb einen Freigabebolzen mit einer Sechskantmutter, durch den die Feststellbremse von einer Person manuell gelöst werden kann. Wird der Freigabebolzen durch eine Drehung der Sechskantmutter, beispielsweise mit einem Gabelschlüssel, herausgedreht, so wird die Druckfeder gespannt und hierdurch die Feststellbremse gelöst.

Zur Befestigung der Mutter auf dem Freigabebolzen weisen der Freigabebolzen und die Mutter jeweils ein gebohrtes Loch auf, in die ein Sicherungsstift geschoben ist. Die Löcher sind hierbei derart ausgeführt, dass der Sicherungsstift mit einem Presssitz im Freigabebolzen sitzt und hierdurch die Mutter sichert.

Die Bohrungen der Löcher des Sicherungsstifts und der Mutter sind jedoch bei der Herstellung in einer Serienproduktion problematisch für Hersteller. Außerdem müssen bei der Montage der Mutter auf dem Freigabebolzen die beiden Löcher genau justiert sein.

Es besteht somit ein Bedarf für einen Bremszylinder mit einer Parkfunktion, der eine einfachere Herstellung aufweist. D2 GB 2 144 803 A zeigt ein Bolzen mit Durchgangslöchern für den Stift und eine Kronenmutter, d. h. die Kerben befinden sich auf der Mutter, nicht auf der Bolzen.

Aufgabe der Erfindung ist es daher, einen derartigen Bremszylinder anzugeben, der eine vereinfachte Herstellung und damit geringere Montagekosten aufweist.

Diese Aufgabe wird durch einen Bremszylinder gemäß Anspruch 1 und ein Nutzfahrzeug gemäß Anspruch 10 gelöst.

Die abhängigen Ansprüche beinhalten vorteilhafte Weiterbildungen und Verbesserungen der Erfindung entsprechend der nachfolgenden Beschreibung dieser Maßnahmen.

Die Erfindung betrifft einen Bremszylinder mit einem Gehäuse, einem Kolben, einem Druckbolzen, einer Druckfeder, einem Freigabebolzen mit einem Gewinde, einem Sicherungsstift und einer Mutter, wobei die Mutter mit dem Sicherungsstift auf einem Ende des Freigabebolzens befestigt ist. Der Freigabebolzen weist hierbei an dem Ende eine Vertiefung zur Aufnahme des Sicherungsstifts auf.

In einer vorteilhaften Ausführungsform weist die Mutter ein Loch oder einen Einschnitt zur Sicherung der Mutter mit dem Sicherungsstift auf dem Freigabebolzen auf.

In einem bevorzugten Ausführungsbeispiel weist die Vertiefung des Freigabebolzens eine quadratische oder eine rechteckige Form auf. Die Tiefe der Vertiefung ist hierbei vorteilhafterweise größer als der Durchmesser des Sicherungsstifts und die Breite der Vertiefung ist gleich oder größer als der Durchmesser des Sicherungsstifts.

In einem weiteren bevorzugten Ausführungsbeispiel weist die Vertiefung des Freigabebolzens eine trapezartige Form auf.

In einem weiteren bevorzugten Ausführungsbeispiel ist die trapezartige Form zum Ende des Freigabebolzens hin verjüngt. Die Vertiefung weist hierbei vorteilhafterweise eine Tiefe auf, die gleich oder größer ist als der Durchmesser des Sicherungsstifts.

In einem weiteren bevorzugten Ausführungsbeispiel weist die Vertiefung der trapezartigen Form an ihrem äußeren Ende eine Breite auf, die kleiner ist als der Durchmesser des Sicherungsstifts, und weist an ihrem inneren Ende eine Breite auf, die größer ist als der Durchmesser des Sicherungsstifts.

In einer weiteren vorteilhaften Ausführungsform sitzt der Sicherungsstift durch einen Presssitz gesichert im Freigabebolzen.

In einer weiteren vorteilhaften Ausführungsform ist die Vertiefung des Freigabebolzens durch einen Fräsvorgang oder einen Sägevorgang bewirkt.

Der Bremszylinder ist vorteilhafterweise für ein Nutzfahrzeug, insbesondere für ein Lastkraftfahrzeug, sowie für ein Anhängefahrzeug, verwendbar.

Ausführungsbeispiele der Erfindung sind in den Zeichnungen schematisch dargestellt und werden nachfolgend anhand der Figuren näher erläutert.

### Es zeigen:

- Fig. 1: einen manuell lösbaren Bremszylinder einer Feststellbremse mit einer Parkfunktion;
- Fig. 2: einen Freigabebolzen des Bremszylinders der Figur 1;
- Fig. 3: ein Ende des Freigabebolzens der Figur 2; und
- Fig. 4: den Freigabebolzen der Figur 2 mit einer Mutter und einem Sicherungsstift.

Die vorliegende Beschreibung veranschaulicht die Prinzipien der erfindungsgemäßen Offenbarung. Es versteht sich somit, dass Fachleute in der Lage sein werden, verschiedene Anordnungen zu konzipieren, die zwar hier nicht explizit beschrieben werden, die aber Prinzipien der erfindungsgemäßen Offenbarung verkörpern und in ihrem Umfang ebenfalls geschützt sein sollen.

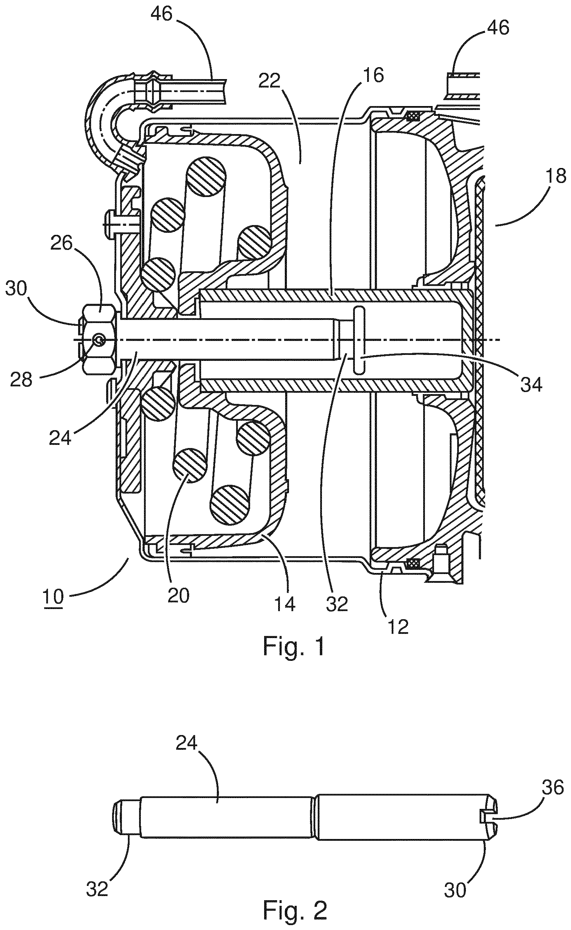

In einem bevorzugten Ausführungsbeispiel, wie in der Fig. 1 dargestellt, enthält ein Bremszylinder 10 ein Gehäuse 12, einen Kolben 14, einen Druckbolzen 16, eine Membran 18 und eine Druckfeder 20. Die Druckfeder 20 ist insbesondere eine Schraubenfeder, beispielsweise eine Tonnenfeder. Der Kolben 14 ist in einem Hohlraum 22 des Gehäuses 12 beweglich angeordnet und bewegt über den Druckbolzen 16 die Membran 18.

Der Bremszylinder 10 ist insbesondere ein Teil einer Druckluftbremse, beispielsweise einer Feststellbremse. Ist der Hohlraum 22 ohne Druckluft, so wird durch die Druckfeder 20 der Kolben 14 verschoben und hierdurch über den Druckbolzen 16 die Membran 18 bewegt, so dass ein Bremsvorgang ausgeführt wird. Wird über ein Bremsventil, beispielsweise ein Handbremsventil, dem Hohlraum 22 Druckluft zugeführt, so wird der Kolben 14 gegen den Widerstand der Druckfeder 20 zurückgeschoben und hierdurch die Druckluftbremse gelöst.

Die Feststellbremse ist beispielsweise in ein Nutzfahrzeug integriert. Da die Feststellbremse ohne Luftdruck blockiert, ist hierdurch das Nutzfahrzeug gesichert, wenn der Motor ausgeschaltet ist und das Bremssystem des Nutzfahrzeugs ohne Druckluft ist. Bei einer Fehlfunktion des Bremssystems, beispielsweise bei einer Leckage des Druckluftsystems, kann das Nutzfahrzeug dann jedoch nicht mehr bewegt werden. Der Bremszylinder enthält deshalb einen Freigabebolzen 24 mit einem Gewinde, auf den an einem außerhalb des Gehäuses 12 liegenden Ende 30 eine Mutter 26 aufgeschraubt ist, beispielsweise eine Sechskantmutter, und durch den die Feststellbremse von einer Person manuell gelöst werden kann.

Der Freigabebolzen 24 weist an seinem dem Ende 30 gegenüberliegenden Ende 32 ein plattenförmiges Endstück 34 oder eine Verdickung auf, durch das der Kolben 14 beim Herausdrehen des Freigabebolzens 24 gegen den Druck der Druckfeder 20 zurückgeschoben wird. Die Mutter 26 ist über einen Sicherungsstift 28 an dem Ende 30 des Freigabebolzens 24 befestigt. Hierdurch kann die Feststellbremse durch die Person manuell gelöst werden, indem der Freigabebolzen 24 durch eine Drehung der Mutter 26, beispielsweise mit einem Gabelschlüssel, von der Person herausgedreht wird.

Der Freigabebolzen 24 weist nach der Erfindung an dem Ende 30 eine Vertiefung 36 auf, wie in der Fig. 2 dargestellt, in die der Sicherungsstift 28 bei der Montage geschoben wird, nachdem die Mutter 26 auf den Freigabebolzen 24 geschraubt ist. Die Vertiefung 36 kann beispielsweise durch einen Fräsvorgang oder mit einer Metallsäge hergestellt werden. Durch die Vertiefung 36 ist hierbei die Mutter 26 durch den Sicherungsstift 28 genauso zuverlässig gesichert wie durch ein Loch im Freigabebolzen 24, die Vertiefung 36 ist jedoch erheblich einfacher und zuverlässiger herzustellen als eine Bohrung durch das Ende 30 des Freigabebolzens 24.

In einem bevorzugten Ausführungsbeispiel hat die Vertiefung 34 eine quadratische oder eine rechteckige Form. Diese Vertiefung kann beispielsweise durch einen Sägevorgang am Ende 30 des Freigabebolzens 24 hergestellt werden. Die Tiefe der Vertiefung 36 ist hierbei vorteilhafterweise größer als der Durchmesser des Sicherungsstifts 28, und die Breite der Vertiefung 36 ist gleich oder größer als der Durchmesser des Sicherungsstifts 28.

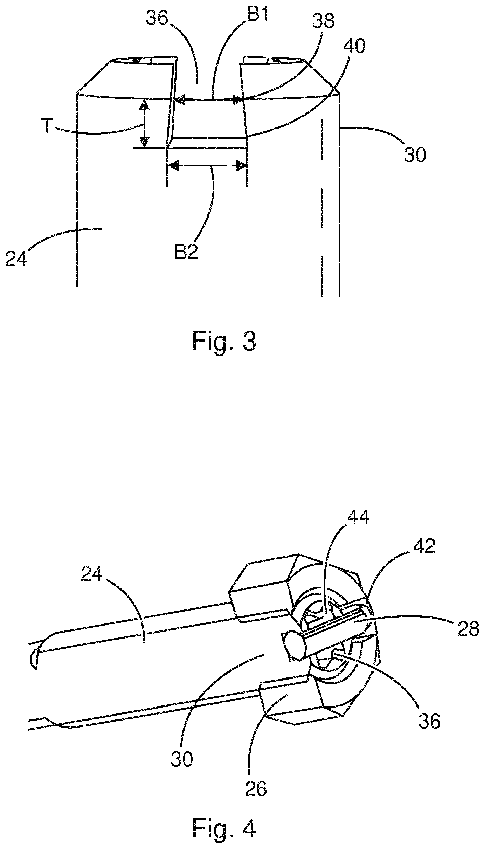

In einem weiteren bevorzugten Ausführungsbeispiel hat die Vertiefung 36 eine trapezartige Form, die zum Ende 30 des Freigabebolzens 24 hin verjüngt ist, wie in der Fig. 3 dargestellt. Diese Vertiefung kann beispielsweise durch einen Fräsvorgang mit einem Fräser am Ende 30 des Freigabebolzens 24 hergestellt werden. Die Tiefe T der Vertiefung 36 ist hierbei vorteilhafterweise gleich oder größer als der Durchmesser des Sicherungsstifts 28. An dem äußeren Ende 38 der Vertiefung 36 hat die Vertiefung 36 eine Breite B1, die kleiner als der Durchmesser der Sicherungsstifts 28 ist, und an dem inneren Ende 40 der Vertiefung 36 hat die Vertiefung 36 eine Breite B2, die größer als der Durchmesser der Sicherungsstifts 28 ist.

Der Freigabebolzen 24 mit der montierten Mutter 26 und dem montierten Sicherungsstift 28 ist schematisch in der Fig. 4 dargestellt. Der Sicherungsstift 28 sitzt hierbei durch einen Presssitz gesichert im Freigabebolzen 24. Die Mutter 26 ist hierdurch durch den Sicherungsstift 28 zuverlässig auf dem Freigabebolzen 24 befestigt. Insbesondere durch die trapezartige Form der Vertiefung 36 kann hierbei ein zuverlässiger Presssitz für den Sicherungsstift 28 hergestellt werden.

Die Mutter 26 kann anstatt eines Lochs, wie in der Fig. 1 dargestellt, auch einen Einschnitt 42 aufweisen, Fig. 4. Hat die Vertiefung beispielsweise eine Tiefe T, die gleich ist dem Durchmesser des Sicherungsstifts 28, dann liegt der Sicherungsstift 28 am Rand des Freigabebolzens 24, wie in der Fig. 4 dargestellt. Ein Loch in der Mutter ist 26 in diesem Fall nicht sinnvoll, da die Mutter 26 idealerweise vollständig auf den Freigabebolzen 24 aufgeschraubt ist. Der Einschnitt 42 der Mutter 26 kann beispielsweise durch einen Sägevorgang hergestellt werden, der problemlos durch einen Hersteller herstellbar ist.

Für den Fall, dass die Mutter 26 ein Loch aufweist, das mittig in der Mutter gelegen ist, wie in der Fig. 1 dargestellt, muss die Tiefe T der Vertiefung 36 idealerweise deutlich größer sein als der Durchmesser des Sicherungsstifts 28. In diesem Fall ist eine rechteckige Vertiefung 36 vorteilhaft, da ein tiefer Einschnitt zur Herstellung dieser Vertiefung 36 in dem Freigabebolzen 24 problemlos mit einem Sägewerkzeug hergestellt werden kann.

In der Figur 4 weist der Sicherungsstift 28 noch einen Torx-Einschnitt 44 in dem Ende 30 des Freigabebolzens 24 auf, der für die Montage des Freigabebolzens 24 in dem Bremszylinder 10 verwendet werden kann. Anstatt eines Torx-Einschnitts 44 kann beispielsweise auch ein Einschnitt für ein Phillips-Werkzeug verwendet werden. Es kann auch auf diesen Einschnitt verzichtet werden, da der Freigabebolzen 24 bereits die Vertiefung 36 aufweist, über die der Freigabebolzen 24 mit einem Schraubendreher in dem Bremszylinder 10 befestigt werden kann.

Der Bremszylinder 10 ist in diesem Ausführungsbeispiel ein Kombibremszylinder, auch als Tristop-Zylinder bekannt. Hierbei ist in dem Bremszylinder 10 eine Betriebsbremse mit der Feststellbremse kombiniert, wobei die Feststellbremse über das Handbremsventil betätigt wird und die Betriebsbremse über ein Betriebsbremsventil. Die Betriebsbremse ist mit der Feststellbremse in diesem Ausführungsbeispiel über eine Druckluftverbindung 46, in der Fig. 1 dargestellt, verbunden.

Ein Kombibremszylinder dieser Art ist vorteilhafterweise für eine druckluftbetriebene Bremsanlage eines Nutzfahrzeugs, insbesondere eines Lastkraftfahrzeugs oder eines Anhängefahrzeugs, verwendbar.

Alle hierin erwähnten Beispiele wie auch bedingte Formulierungen sind ohne Einschränkung auf solche speziell angeführten Ausführungsbeispiele zu verstehen. Die Offenbarung ist nicht auf die hier beschriebenen Ausführungsbeispiele beschränkt. Es gibt Raum für verschiedene Anpassungen und Modifikationen, die der Fachmann aufgrund seines Fachwissens als auch zu der Offenbarung zugehörend in Betracht ziehen würde.

### Bezugszeichenliste (Teil der Beschreibung)

- 10: Bremszylinder
- 12: Gehäuse
- 14: Kolben
- 16: Druckbolzen
- 18: Membran
- 20: Druckfeder
- 22: Hohlraum
- 24: Freigabebolzen
- 26: Mutter
- 28: Sicherungsstift
- 30, 32: Enden des Freigabebolzens
- 34: Endstück
- 36: Vertiefung des Freigabebolzens
- 38: äußeres Ende der Vertiefung
- 40: inneres Ende der Vertiefung
- 42: Einschnitt der Mutter
- 44: Torx-Einschnitt
- 46: Druckluftverbindung
- T: Tiefe der Vertiefung 36
- B1, B2: Breiten der Vertiefung 36

## Patentansprüche

1. Bremszylinder (10) mit einem Gehäuse (12), einem Kolben (14), einem Druckbolzen (16), einer Druckfeder (20), einem Freigabebolzen (24) mit einem Gewinde, einem Sicherungsstift (28) und einer Mutter (26), wobei die Mutter (26) mit dem Sicherungsstift (28) auf einem Ende (30) des Freigabebolzens (24) befestigt ist, **dadurch gekennzeichnet, dass** der Freigabebolzen (24) an dem Ende (30) eine Vertiefung (36) zur Aufnahme des Sicherungsstifts (28) aufweist.

2. Bremszylinder (10) nach Anspruch 1, wobei die Mutter (26) ein Loch oder einen Einschnitt (42) zur Sicherung der Mutter (26) mit dem Sicherungsstift (28) auf dem Freigabebolzen (24) aufweist.

3. Bremszylinder (10) nach Anspruch 1 oder 2, wobei die Vertiefung (36) des Freigabebolzens (10) eine quadratische oder eine rechteckige Form aufweist.

4. Bremszylinder (10) nach Anspruch 3, wobei die Tiefe der Vertiefung (36) größer als der Durchmesser des Sicherungsstifts (28) und die Breite der Vertiefung (36) gleich oder größer als der Durchmesser des Sicherungsstifts (28) ist.

5. Bremszylinder (10) nach Anspruch 1 oder 2, wobei die Vertiefung (36) des Freigabebolzens (24) eine trapezartige Form aufweist.

6. Bremszylinder (10) nach Anspruch 5, wobei die trapezartige Form zum Ende (30) des Freigabebolzens (24) hin verjüngt ist.

7. Bremszylinder (10) nach Anspruch 4 oder 5, wobei die Vertiefung (36) eine Tiefe (T) aufweist, die gleich oder größer als der Durchmesser des Sicherungsstifts (28) ist, und die Vertiefung (36) an ihrem äußeren Ende (38) eine Breite (B1) aufweist, die kleiner als der Durchmesser des Sicherungsstifts (28) ist, und die Vertiefung (36) an ihrem inneren Ende (40) eine Breite (B2) aufweist, die größer als der Durchmesser des Sicherungsstifts (28) ist.

8. Bremszylinder (10) nach einem der vorangehenden Ansprüche, wobei der Sicherungsstift (28) durch einen Presssitz gesichert im Freigabebolzen (24) sitzt.

9. Bremszylinder (10) nach einem der vorangehenden Ansprüche, wobei die Vertiefung (36) des Freigabebolzens (24) durch einen Fräsvorgang oder einen Sägevorgang bewirkt ist.

10. Nutzfahrzeug, insbesondere Lastkraftfahrzeug oder Anhängefahrzeug, das einen Bremszylinder (10) nach einem der vorangehenden Ansprüche aufweist.

## Claims

1. Brake cylinder (10) comprising a housing (12), a piston (14), a pressure bolt (16), a compression spring (20), a release bolt (24) having a thread, a securing pin (28) and a nut (26), the nut (26) being fastened to an end (30) of the release bolt (24) by means of the securing pin (28), **characterized in that** the release bolt (24) has a depression (36) at its end (30) for accommodating the securing pin (28).

2. Brake cylinder (10) according to claim 1, wherein the nut (26) has a hole or an incision (42) for securing the nut (26) on the release bolt (24) by means of the securing pin (28).

3. Brake cylinder (10) according to either claim 1 or claim 2, wherein the depression (36) in the release bolt (10) has a square or rectangular shape.

4. Brake cylinder (10) according to claim 3, wherein the depth of the depression (36) is greater than the diameter of the securing pin (28) and the width of the depression (36) is equal to or greater than the diameter of the securing pin (28).

5. Brake cylinder (10) according to either claim 1 or claim 2, wherein the depression (36) of the release bolt (24) has a trapezoidal shape.

6. Brake cylinder (10) according to claim 5, wherein the trapezoidal shape is tapered towards the end (30) of the release bolt (24).

7. Brake cylinder (10) according to either claim 4 or claim 5, wherein the depression (36) has a depth (T) which is equal to or greater than the diameter of the securing pin (28), and the depression (36), at its outer end (38), has a width (B1) which is smaller than the diameter of the securing pin (28), and the depression (36), at its inner end (40), has a width (B2) which is greater than the diameter of the securing pin (28).

8. Brake cylinder (10) according to any of the preceding claims, wherein the securing pin (28) is secured in the release bolt (24) by a press fit.

9. Brake cylinder (10) according to any of the preceding claims, wherein the depression (36) in the release bolt (24) is effected by a milling process or a sawing process.

10. Commercial vehicle, in particular a heavy goods vehicle or trailer vehicle, having a brake cylinder (10) according to any of the preceding claims.

## Revendications

1. Cylindre de frein (10) comportant un boîtier (12), un piston (14), un boulon de pression (16), un ressort de pression (20), un boulon de déverrouillage (24) comportant un filetage, une goupille de verrouillage (28) et un écrou (26), dans lequel l'écrou (26) est fixé à la goupille de verrouillage (28) sur une extrémité (30) du boulon de déverrouillage (24), **caractérisé en ce que** le boulon de déverrouillage (24) présente, au niveau de l'extrémité (30), un évidement (36) destiné à recevoir la goupille de verrouillage (28).

2. Cylindre de frein (10) selon la revendication 1, dans lequel l'écrou (26) présente un trou ou une encoche (42) permettant de verrouiller l'écrou (26) sur le boulon de déverrouillage (24) à l'aide de la goupille de verrouillage (28).

3. Cylindre de frein (10) selon la revendication 1 ou 2, dans lequel l'évidement (36) du boulon de déverrouillage (10) présente une forme carrée ou une forme rectangulaire.

4. Cylindre de frein (10) selon la revendication 3, dans lequel la profondeur de l'évidement (36) est supérieure au diamètre de la goupille de verrouillage (28) et la largeur de l'évidement (36) est supérieure ou égale au diamètre de la goupille de verrouillage (28).

5. Cylindre de frein (10) selon la revendication 1 ou 2, dans lequel l'évidement (36) du boulon de déverrouillage (24) présente une forme trapézoïdale.

6. Cylindre de frein (10) selon la revendication 5, dans lequel la forme trapézoïdale est conique vers l'extrémité (30) du boulon de déverrouillage (24).

7. Cylindre de frein (10) selon la revendication 4 ou 5, dans lequel l'évidement (36) présente une profondeur (T) supérieure ou égale au diamètre de la goupille de verrouillage (28), et l'évidement (36) présente, au niveau de son extrémité extérieure (38), une largeur (B1) inférieure au diamètre de la goupille de verrouillage (28), et l'évidement (36) présente, au niveau de son extrémité intérieure (40), une largeur (B2) supérieure au diamètre de la goupille de verrouillage (28).

8. Cylindre de frein (10) selon l'une quelconque des revendications précédentes, dans lequel la goupille de verrouillage (28) repose de manière verrouillée dans le boulon de déverrouillage (24) par ajustement serré.

9. Cylindre de frein (10) selon l'une quelconque des revendications précédentes, dans lequel l'évidement (36) du boulon de déverrouillage (24) est réalisé par un processus de fraisage ou un processus de sciage.

10. Véhicule utilitaire, en particulier camion ou véhicule tracté, présentant un cylindre de frein (10) selon l'une quelconque des revendications précédentes.
